# DEMANDE DE BREVET EUROPEEN

(11) **EP 3 243 680 A1**
(43) Date de publication de la demande: **15.11.2017**
(21) Numéro de dépôt: 17166795.9
(22) Date de dépôt: 18.04.2017
(51) Int. Cl.: B60K 13/04, B60K 15/04, B60K 15/05

(54) **INTERFACE D'AIDE AU REMPLISSAGE DE RESERVOIRS**

(30) Priorité: 12.05.2016 FR 1654217
(71) Demandeur: PSA Automobiles SA, 78300 Poissy (FR)
(72) Inventeur: HUREAUX, SEBASTIEN, 70200 MAGNY DANIGON (FR); HOUALET, TRISTAN, 25200 MONTBELIARD (FR); ROKOSZ, RACHEL, 25550 ISSANS (FR)

(57) **Abrégé**

L'invention porte principalement sur une interface (10) de remplissage comportant:
- une conduite primaire (11) apte à être fermée par un premier bouchon (15),
- une conduite secondaire (13) apte à être fermée par un deuxième bouchon (16),
- chacune desdites conduites primaire (11) et secondaire (13) étant en relation respectivement avec un réservoir primaire et un réservoir secondaire distincts, caractérisée en ce que ladite interface (10) comporte en outre:
- un dispositif de posage (21) desdits bouchons (15, 16), et
- des détrompeurs ménagés dans ledit premier (15) et dans ledit deuxième bouchon (16), lesdits détrompeurs étant situés à deux positions différentes lorsque lesdits bouchons (15, 16) sont positionnés sur ledit dispositif de posage (21) pour discriminer un fluide contenu dans ledit réservoir primaire par rapport à un fluide contenu dans ledit réservoir secondaire.

## Description

La présente invention porte sur une interface d'aide au remplissage de réservoirs. L'invention trouve une application particulièrement avantageuse, mais non exclusive, dans le domaine des véhicules automobiles.

Les véhicules automobiles sont équipés d'un réservoir de carburant dans lequel est contenu le carburant alimentant le moteur. Les véhicules peuvent également comprendre des réservoirs annexes et, notamment dans le cas de certains véhicules actuels à moteur diesel, un réservoir contenant un liquide de dépollution, tel que de l'urée ou un précurseur de l'urée. L'urée est utilisée comme agent réducteur en association avec un catalyseur pour réduire les oxydes d'azote via le processus de réduction catalytique sélective.

Sur les véhicules actuels, les réservoirs d'urée ont une ouverture débouchant dans le coffre du véhicule pour permettre le remplissage du réservoir d'urée par l'utilisateur du véhicule. Cependant, la position de cette ouverture rend le remplissage long et fastidieux. Dès lors le remplissage du réservoir d'urée n'est pas effectué par les utilisateurs, mais par les garagistes lors du dépôt du véhicule pour une révision par exemple.

Toutefois, les normes d'émission d'oxydes d'azote devenant plus sévères, la consommation d'urée pour chaque véhicule sera plus importante et le remplissage du réservoir d'urée plus fréquent, rendant encore plus fastidieux le remplissage du réservoir d'urée par le coffre du véhicule.

Certains constructeurs automobiles ont alors décidé de déplacer l'ouverture du réservoir d'urée pour qu'elle débouche à côté de la conduite du réservoir de carburant dans le module correspondant. Ce repositionnement de la conduite du réservoir d'urée permet, outre la facilité de remplissage pour l'utilisateur, de rappeler indirectement à l'utilisateur que le réservoir d'urée est à remplir par ses soins.

La présence simultanée de deux ouvertures de remplissage au sein d'un même module entraîne cependant un risque d'erreur de la part de l'utilisateur qui est susceptible de remplir un des réservoirs avec un produit inapproprié. Un remplissage inadéquat nécessite une intervention d'un spécialiste pour réparer l'erreur, ce qui requiert du temps et représente un coût important.

Pour éviter la confusion entre les réservoirs, il existe des dispositifs sécuritaires capables de boucher sélectivement une des conduites, comme cela est décrit dans le document FR3019108.

L'invention vise à proposer une solution alternative. A cet effet, l'invention a pour objet une interface de remplissage comportant:
- une conduite primaire apte à être fermée par un premier bouchon,
- une conduite secondaire apte à être fermée par un deuxième bouchon,
- chacune des conduites primaire et secondaire étant en relation respectivement avec un réservoir primaire et un réservoir secondaire distincts,
caractérisée en ce que l'interface comporte en outre:
- un dispositif de posage des bouchons, et
- des détrompeurs ménagés dans le premier et dans le deuxième bouchon, les détrompeurs étant situés à deux positions différentes lorsque les bouchons sont positionnés sur le dispositif de posage pour discriminer un fluide contenu dans le réservoir primaire par rapport à un fluide contenu dans le réservoir secondaire.

L'invention permet ainsi, d'éviter de confondre le réservoir à carburant avec le réservoir de liquide de dépollution et vice versa. Cela permet d'éviter en outre une détérioration des composants du moteur thermique et/ou du système anti-pollution avec un mauvais fluide nécessitant par la suite de longues et couteuses réparations.

Selon une réalisation, un capteur de présence est situé en vis-à-vis des détrompeurs lorsque les bouchons correspondant sont positionnés sur le dispositif de posage. Cela permet de détecter automatiquement la position des détrompeurs.

Selon une réalisation, le capteur de présence est en relation avec un dispositif d'affichage apte à fournir un signal de remplissage d'un fluide correspondant au réservoir dont le bouchon de la conduite a été retiré.

Selon une réalisation, le dispositif d'affichage comporte deux voyants lumineux.

Selon une réalisation, les dispositifs d'affichage sont situés au-dessus de chaque ouverture de remplissage des conduites débouchant vers l'extérieur d'un véhicule. On informe ainsi clairement le conducteur du bon liquide à remplir dans le réservoir dont le bouchon a été retiré.

Selon une réalisation, le capteur de présence est relié au dispositif d'affichage via un faisceau électrique.

Selon une réalisation, une information de posage des bouchons issue du capteur de présence est apte à être acheminée vers un ordinateur de bord pour son affichage sur une planche de bord à l'aide d'un témoin lumineux. Cela permet d'indiquer au conducteur que le bouchon a été oublié sur son crochet de posage.

Selon une réalisation, le dispositif de posage comporte un crochet ménagé sur une face interne d'une trappe de fermeture de l'interface.

Selon une réalisation, les détrompeurs prennent la forme d'ergots ménagés chacun sur une branche d'un contour délimitant une ouverture autorisant un passage du dispositif de posage.

Selon une réalisation, la conduite primaire est une conduite de carburant et la conduite secondaire est une conduite de liquide de dépollution.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en perspective d'un ensemble comportant un réservoir à carburant et un réservoir à liquide de dépollution en relation avec une interface de remplissage selon la présente invention;
La figure 2 est une vue en perspective d'une interface de remplissage selon la présente invention comportant un dispositif de posage de bouchons;
Les figures 3a et 3b sont des vues en perspectives illustrant le positionnement des détrompeurs respectivement lorsque le bouchon de la conduite de carburant et le bouchon de la conduite de liquide de dépollution sont situés sur le dispositif de posage.

Les éléments identiques, similaires, ou analogues conservent la même référence d'une figure à l'autre.

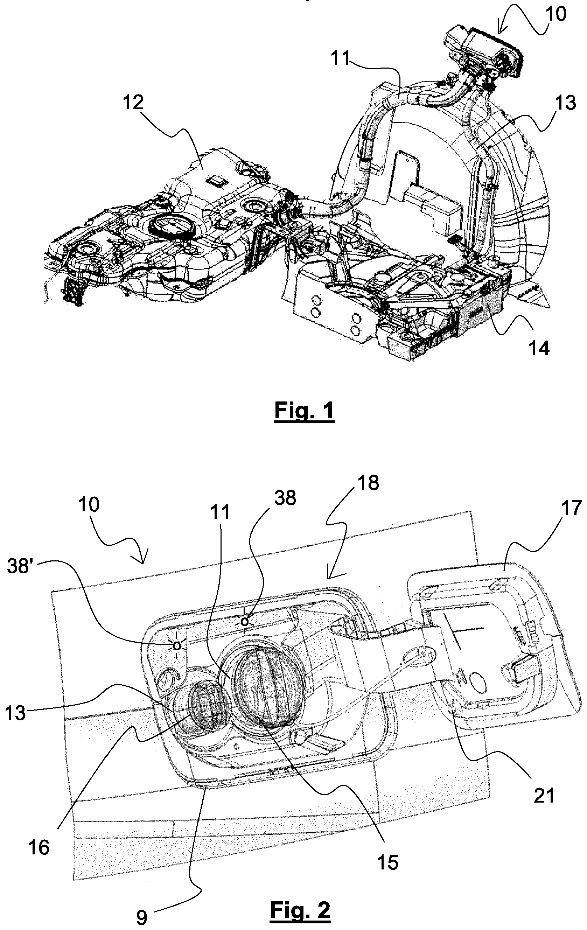

La figure 2 représente une interface 10 de remplissage située sur une aile d'un véhicule automobile et comprenant une conduite primaire 11 et une conduite secondaire 13 comprenant chacune une ouverture débouchant dans une embrasure 9. L'interface 10 comporte en outre une trappe de fermeture 17 pivotante à charnière mobile entre une position ouverte permettant d'avoir accès aux conduites 11,13 et une position fermée permettant de sécuriser l'interface 10 lorsque le véhicule est en phase de roulage.

Typiquement et comme cela est visible sur la figure 1, la conduite primaire 11 est une conduite en relation avec un réservoir primaire de carburant 12 et la conduite secondaire 13 est une conduite en relation avec un réservoir secondaire additionnel 14, par exemple un réservoir de liquide de dépollution, tel que de l'urée ou un précurseur de l'urée.

Pour assurer l'étanchéité des conduites de carburant 11 et de dépollution 13 et empêcher l'évaporation des liquides qu'ils contiennent, les ouvertures des conduites 11,13 sont obturées respectivement par un premier bouchon 15 et un deuxième bouchon 16 amovibles. L'ouverture et la fermeture de ces bouchons 15,16 pourront le cas échéant nécessiter l'utilisation d'une clef.

L'interface 10 est équipée d'un boîtier 18 dont le fond est muni de trous pour permettre l'installation des conduites de carburant 11 et de dépollution 13 à l'intérieur du volume délimité par l'embrasure 9.

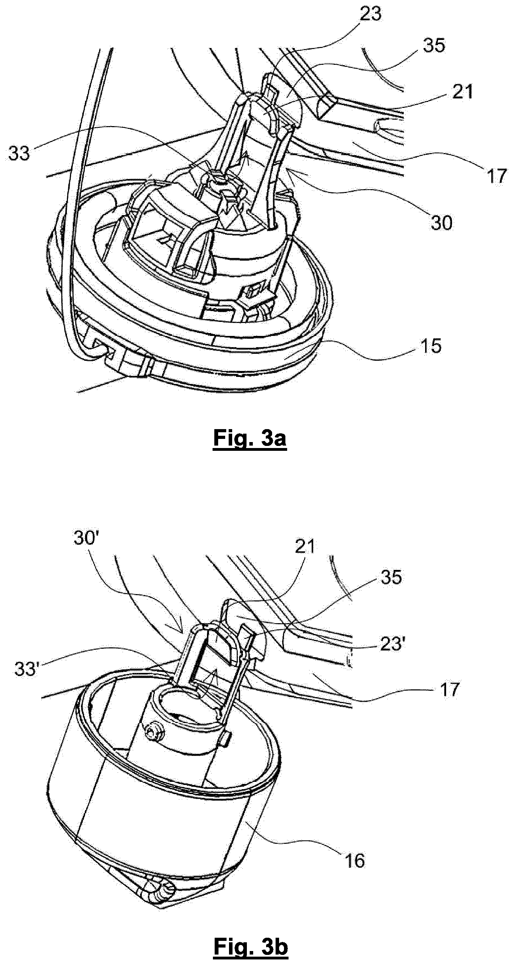

L'interface 10 comporte en outre un dispositif de posage 21 des bouchons 15, 16, comme cela est représenté sur les figures 3a et 3b. A cet effet, le dispositif de posage 21 comporte un crochet "en forme de L" ménagé sur la face interne de la trappe 17.

De manière à détecter et identifier correctement le bon bouchon 15, 16 sur le crochet en L de la trappe 17, des détrompeurs 23, 23' sont ménagés dans le premier 15 et dans le deuxième bouchon 16, comme cela est visible sur les figures 3a et 3b. Lorsque les bouchons 15, 16 sont positionnés sur le dispositif de posage 21, les détrompeurs 23, 23' sont situés à deux positions différentes par rapport au dispositif de posage 21. Cette différence entre les deux positions permet de discriminer le carburant contenu dans le réservoir primaire 12 par rapport au liquide de dépollution contenu dans le réservoir secondaire 14.

Dans l'exemple représenté, les détrompeurs 23, 23' pourront prendre la forme d'ergots. L'ergot 23 du bouchon de la conduite de carburant 15 est situé du côté gauche du dispositif de posage 21 et l'ergot 23' du bouchon de la conduite de liquide de dépollution 16 est situé du côté droit du dispositif de posage 21. Une configuration inverse est bien entendu envisageable.

Les ergots 23, 23' pourront être ménagés par exemple chacun sur un contour 30, 30' issu du bouchon correspondant 15, 16. Chaque contour 30, 30' délimite une ouverture 33, 33' autorisant le passage du dispositif de posage 21. En l'occurrence, le contour 30, 30' est formé par trois branches en forme de U dont les extrémités libres sont reliées au bouchon 15, 16. La branche du fond du U est destinée à reposer sur le crochet 21. Chaque contour 30, 30' s'étend en saillie dans le prolongement d'une portion cylindrique interne du bouchon 15, 16. Chaque contour 30, 30' s'étend ainsi vers l'intérieur de la conduite 11, 13 correspondante lorsque le bouchon 15, 16 est à l'état fermé.

De manière à détecter automatiquement la position des détrompeurs 23, 23', l'interface 10 comporte un capteur de présence 35 situé en vis-à-vis des détrompeurs 23, 23' lorsque les bouchons 15, 16 correspondant sont positionnés sur le dispositif de posage 21. A cet effet, le capteur 35 est positionné sur la face interne de la trappe 17 en regard du crochet en L.

Avantageusement, le capteur 35 est en relation avec un dispositif d'affichage 38, 38' apte à fournir un signal de remplissage d'un fluide correspondant au réservoir 12, 14 dont le bouchon 15, 16 correspondant de la conduite 11, 13 a été retiré. A cet effet, le dispositif de d'affichage 38, 38' pourra par exemple comporter deux voyants lumineux, par exemple de type LED (ou "Light-Emitting Diode" en anglais), ou ampoule, ou de tout autre type, situés au-dessus de chaque ouverture de remplissage des conduites 11, 13 débouchant vers l'extérieur du véhicule automobile.

Le signal lumineux a une couleur facilement identifiable, dépendante du fluide à remplir. Par exemple, on pourra choisir la couleur jaune pour le carburant et la couleur bleue pour le liquide de dépollution. On informe ainsi clairement le conducteur du bon liquide à remplir dans le réservoir 12, 14 dont le bouchon 15, 16 a été retiré. En variante, le signal de remplissage pourra prendre la forme d'une alerte vocale.

Le capteur 35 est relié au dispositif d'affichage 38, 38' via un faisceau électrique. Ce faisceau électrique pourra correspondre au faisceau électrique du véhicule présent en zone de roue arrière droite auquel est relié l'actionneur de verrouillage de la trappe 17. En se branchant sur ce faisceau avec une prolongation, cela permet de garantir et d'ajouter aisément les nouvelles fonctions de détrompage sur l'interface 10 de remplissage.

De manière à indiquer au conducteur que le bouchon 15, 16 a été oublié sur le dispositif de posage 21, l'information de posage du bouchon 15, 16 issue du capteur 35 est apte à être acheminée via un faisceau d'habitacle vers un ordinateur de bord du véhicule. Il sera possible de prévoir un affichage correspondant sur la planche de bord à l'aide d'un témoin lumineux. Une telle configuration permet de disposer d'un dispositif anti-oubli sur le tableau de bord lors de la phase de remplissage par le conducteur.

Avantageusement, chacune des deux conduites 11,13 présente en outre une signalétique différente. Par exemple, le bouchon 16 de la conduite de liquide de dépollution peut-être de couleur bleue et/ou l'inscription "UREE" y figure ou est au voisinage de celui-ci. De même pour le bouchon 15 de la conduite de carburant, l'inscription "DIESEL" peut être ajoutée.

L'invention a été décrite dans le cadre d'une mise en oeuvre avec deux réservoirs 12, 14 contenant des liquides différents. L'invention pourra également être mise en oeuvre avec des réservoirs contenant tout type de fluides différents, tels que des gaz ou des éléments solides ou cristallins.

## Revendications

1. Interface (10) de remplissage comportant:
- une conduite primaire (11) apte à être fermée par un premier bouchon (15),
- une conduite secondaire (13) apte à être fermée par un deuxième bouchon (16),
- chacune desdites conduites primaire (11) et secondaire (13) étant en relation respectivement avec un réservoir primaire (12) et un réservoir secondaire (14) distincts,
**caractérisée en ce que** ladite interface (10) comporte en outre:
- un dispositif de posage (21) desdits bouchons (15, 16), et
- des détrompeurs (23, 23') ménagés dans ledit premier (15) et dans ledit deuxième bouchon (16), lesdits détrompeurs (23, 23') étant situés à deux positions différentes lorsque lesdits bouchons (15, 16) sont positionnés sur ledit dispositif de posage (21) pour discriminer un fluide contenu dans ledit réservoir primaire (12) par rapport à un fluide contenu dans ledit réservoir secondaire (14).

2. Interface selon la revendication 1, **caractérisée en ce qu'**un capteur de présence (35) est situé en vis-à-vis desdits détrompeurs (23, 23') lorsque lesdits bouchons (15, 16) correspondant sont positionnés sur ledit dispositif de posage (21).

3. Interface selon la revendication 2, **caractérisée en ce que** ledit capteur de présence (35) est en relation avec un dispositif d'affichage (38, 38') apte à fournir un signal de remplissage d'un fluide correspondant audit réservoir (12, 14) dont ledit bouchon (15, 16) de ladite conduite (11, 13) a été retiré.

4. Interface selon la revendication 3, **caractérisée en ce que** ledit dispositif d'affichage (38, 38') comporte deux voyants lumineux.

5. Interface selon la revendication 3 ou 4, **caractérisée en ce que** lesdits dispositifs d'affichage (38, 38') sont situés au-dessus de chaque ouverture de remplissage desdites conduites (11, 13) débouchant vers l'extérieur d'un véhicule.

6. Interface selon l'une quelconque des revendications 3 à 5, **caractérisée en ce que** ledit capteur de présence (35) est relié audit dispositif d'affichage (38, 38') via un faisceau électrique.

7. Interface selon l'une quelconque des revendications 2 à 6, **caractérisée en ce qu'**une information de posage desdits bouchons (15, 16) issue dudit capteur de présence (35) est apte à être acheminée vers un ordinateur de bord pour son affichage sur une planche de bord à l'aide d'un témoin lumineux.

8. Interface selon l'une quelconque des revendications 1 à 7, **caractérisée en ce que** ledit dispositif de posage (21) comporte un crochet ménagé sur une face interne d'une trappe de fermeture (17) de ladite interface (10).

9. Interface selon l'une quelconque des revendications 1 à 8, **caractérisée en ce que** lesdits détrompeurs (23, 23') prennent la forme d'ergots ménagés chacun sur une branche d'un contour (30, 30') délimitant une ouverture (33, 33') autorisant un passage dudit dispositif de posage (21).

10. Interface selon l'une quelconque des revendications 1 à 9, **caractérisée en ce que** ladite conduite primaire (11) est une conduite de carburant et ladite conduite secondaire (13) est une conduite de liquide de dépollution.
